# EUROPEAN PATENT SPECIFICATION

(11) **EP 3 742 092 B1**
(45) Date of publication and mention of the grant of the patent: **12.07.2023**
(21) Application number: 18901337.8
(22) Date of filing: 24.12.2018
(51) Int. Cl.: F25D 25/02, F25D 23/04, A47B 46/00

(54) **REFRIGERATOR AND REFRIGERATOR DOOR**
KÜHLSCHRANK UND KÜHLSCHRANKTÜR
RÉFRIGÉRATEUR ET PORTE DE RÉFRIGÉRATEUR

(30) Priority: 19.01.2018 CN 201810055375
(43) Date of publication of application: 25.11.2020
(73) Proprietor: Qingdao Haier Co., Ltd., Shandong 266101 (CN)
(72) Inventor: ZHU, Xiaobing, Qingdao, Shandong 266101 (CN); ZHANG, Hao, Qingdao, Shandong 266101 (CN); LIU, Haoquan, Qingdao, Shandong 266101 (CN); YANG, Chun, Qingdao, Shandong 266101 (CN)
(74) Representative: Lavoix
(86) International application number: PCT/CN2018/123086
(87) International publication number: WO 2019/141049

(56) References cited:
- WO-A1-2015/131765
- WO-A1-2016/207955
- CN-A- 102 228 343
- CN-A- 102 937 359
- CN-A- 104 540 418
- CN-A- 106 240 426
- CN-A- 108 195 131
- CN-U- 203 216 197
- DE-A1-102009 028 418
- JP-A- 2001 280 829
- JP-A- 2001 280 829
- JP-A- 2003 279 243
- JP-A- 2007 046 807
- US-A- 3 519 319
- US-A- 3 722 975
- US-A1- 2005 012 440
- US-A1- 2015 176 887

## Description

### TECHNICAL FIELD

The present invention relates to a refrigerator, a refrigerator door and a rotatable storage rack, and belongs to the field of refrigeration equipment.

### BACKGROUND

In recent years, more and more refrigerators provide independent dry-zone space to facilitate a user to store foods such as multigrain and dried food. It is a sensible act to provide the dry zones on a refrigeration door of the refrigerator because the dry zones are easily accessible and improve the user's convenience in accessing the articles. Furthermore, multi-layer dry zones on the door facilitate classification, so the user may finely partition the zones according to his own needs and avoid transfer of odor of different food.

However, a conventional storage rack disposed on the door of the refrigerator has an undesirable sealing performance. Even though the storage rack has a cover that can provide full covering, a serious problem such as air leakage is caused due to a large assembling gap, so that humidity in the interior of the storage rack is made uncontrollable and dried food cannot be stored in the storage rack as a dry zone. In addition, if the dry zones on the door are disposed in a middle-upper portion of the refrigeration door or refrigeration compartment, users with ordinary height cannot access articles conveniently.

US 2005/012440 A1 discloses a slide rail unit for guiding an object to be pulled out, such as drawer, from a body, such as furniture or desk, in which the object is slidably accommodated, wherein it includes a body side rail provided for the body, and an object side rail provided for the object to be pulled out to be slidable relative to the body side rail. The body side rail and the object side rail each has a portion bent in a circular-arc shape so that the object is pulled out along a circular-arc locus.

JP 2001 280829 A discloses a refrigerator wherein when a user draws out a heat insulating door and a storage container, a first roller on a first rail is guided to a guide face. Also, a second roller on a second rail is guided to circular guide faces, abuts on a stopper and is locked. In this way, the heat insulating door inclines on a side of the storage container with a small dead angle being generated that makes easier to look out over this side of the storage container.

US 3,519,319 A discloses a storage drawer unit having a slidable transparent cover mounted in a single carrier frame or in multiple units in a multiple carrier frame, wherein the units have side cams slidable in inclined tracks in the carrier frames causing downward tilting of the drawer(s) when pulled out. During the downward tilting, the transparent cover is latched in retracted, the drawer units being removable with said covers thereon by tilting the units upwardly when pulling them out of the carrier frame.

In view of this, it is necessary to provide a novel dry-zone structure which provides high sealing performance and facilitates the user to access articles, to solve the above problems.

### SUMMARY

An object of the present invention is to provide a novel dry zone structure, which can improve the sealing performance, ensure dryness of food materials, improve the user's convenience in accessing articles, and avoid reduction of consumption satisfaction due to insufficient height of the user.

To implement the above object, the present invention provides a refrigerator door according to claims 1 to 7..

To achieve the above object of the present invention, the present invention further provides a refrigerator according to claim 8.

Advantageous effects of the present invention are as follows: as compared with the prior art, the rotatable storage rack according to the present invention has the thus arranged curved slide rail so that the drawer can rotate downward by a certain angle after being horizontally pulled to an extreme position, so that users not tall enough can conveniently access food, thereby enhancing the user's consumption experience. Furthermore, the gapless fitting of the drawer and the storage rack body facilitates the storage rack to be independently controlled as a dry zone in terms of dryness and humidity, and avoids the problems such as air leakage and undesirable sealing performance.

### BRIEF DESCRIPTION OF THE DRAWINGS

FIG. 1 is a perspective view of a refrigerator door in a preferred embodiment of the present invention;
FIG. 2 is a perspective view of a rotatable storage rack in the refrigerator door shown in FIG. 1;
FIG. 3 is an exploded view of the rotatable storage rack shown in FIG. 2;
FIG. 4 is a schematic structural diagram of a support plate of the rotatable storage rack shown in FIG. 2;
FIG. 5 is a schematic view in which a drawer of the rotatable storage rack shown in FIG. 2 is in an initial movement state;
FIG. 6 is a schematic view in which the drawer of the rotatable storage rack shown in FIG. 2 is in an intermediate movement state.

### DETAILED DESCRIPTION

The present invention will be described below in detail in combination with specific embodiments illustrated in drawings. However, these embodiments have no limitations on the present invention, and any transformations of structure, method, or function made by persons skilled in the art according to these embodiments fall within the protection scope of the present invention.

The terms expressive of spacial relative positions, such as "upper", "above", "lower", "below", or the like herein are used to describe the relationship of a unit or feature relative to another unit or feature in the drawings, for the purpose of illustration and description. Terms expressive of the spacial relative positions are intended to comprise different orientations of the device in use or operation other than the orientations shown in the drawings. For example, if the device in the drawings is turned over, the units which are described to be located "below" or "under" other units or features are "above" other units or features. Therefore, the exemplary term "below" may comprise both the "above" and "below" orientations. The device may be oriented (rotated by 90 degrees or other orientations) in other ways, correspondingly explaining the expressions related to the space herein. Also, it should be understood that although the terms of first, second, etc. may be used herein to describe various elements or structures, these described objects should not be limited by them. These terms are merely used to distinguish these described objects.

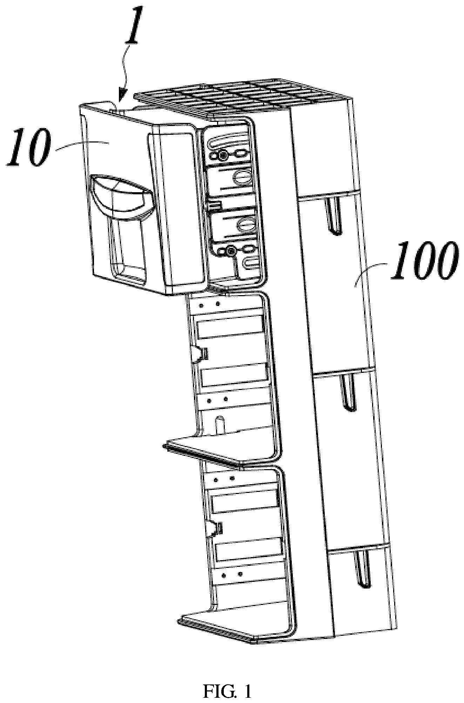

A preferred refrigerator of the present invention comprises a refrigerator door. The refrigerator door comprises a housing, an inner liner 100, and a foaming material filled between the housing and the inner liner 100. As shown in FIG. 1, the inner liner 100 of the door is integrally formed, it comprises three layers of compartments, and each compartment may be used alone as an ordinary storage rack 1 to open to place bottle can-like articles such as beverage bottles and wine bottles, and may also be provided as an independent dry zone. Certainly, the designer may appropriately adjust the number of compartments in the inner liner 100 according to different refrigerator specifications and use needs.

For ease of description, FIG. 1 shows only one storage rack 1 used as a dry zone, which is located on the top of the compartment. The storage rack 1 comprises a drawer 10, a storage rack body 20 for slidingly receiving the drawer 10, and a sliding assembly disposed between the drawer 10 and the storage rack body 20. The storage rack body 20 is disposed in the inner liner 100 of the door. In the present embodiment, the storage rack body 20 is an inner liner 100 formed by a bottom wall, a top wall, left and right side walls, and a rear wall. The storage rack body 20 slideably receives the drawer 10. When the drawer 10 completely enters the storage rack body 20, the interior of the storage rack 1 is well sealed, and may serve as a dry zone of which temperature and humidity can be regulated and controlled independently, thereby ensuring dryness of food materials and avoiding undesirable sealing performance of a conventional storage rack 1 caused by an assembling gap of a cover body.

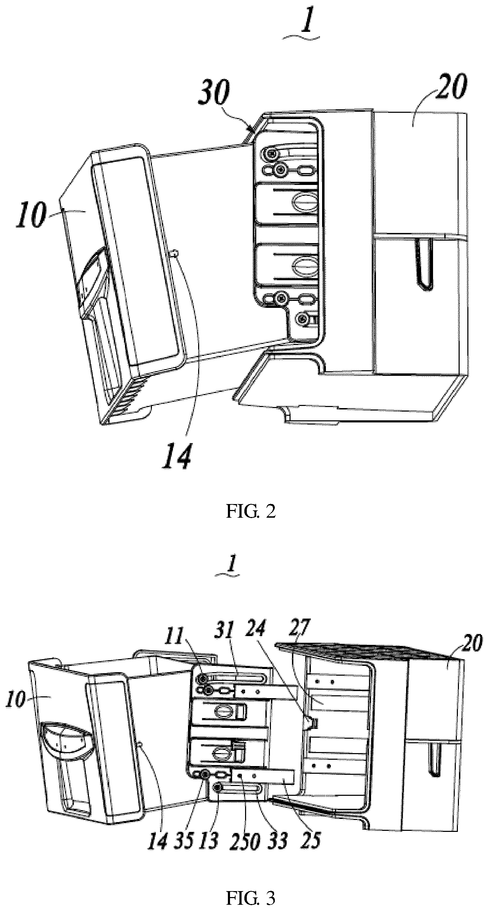

As shown in FIG. 3, the storage rack 1 comprises a latch structure comprising a male portion and a female portion, the male portion is provided on one of the drawer 10 and the storage rack body 20, the female portion is disposed on the other of the drawer 10 and the storage rack body 20, and the male portion and the female portion cooperate with each other unlockably. As shown in FIG. 3, the male portion is configured as a snap 14 connected to one end of the drawer 10, the female portion is provided on the storage rack body 20 and configured as a catch groove 24 which receives the snap 24 and able to release the snap 24, a spring is disposed in the catch groove 24 to facilitate elastically releasing the snap 14 when needs to unlock the snap 14.

As shown in FIG. 2, a sliding assembly is provided between the storage rack body 20 and the drawer 10. The sliding assembly is symmetrically disposed between two side walls of the drawer 10 and left and right side walls of the storage rack body 20. For the convenience of description, only the sliding assembly on the right side of the figure (at a bottom right side of the figure) is taken as an example for description.

As shown in FIG. 2 and FIG. 3, the sliding assembly comprises a curved slide rail 31 and a first pulley 11 moving along the curved slide rail 31. the curved slide rail 31 comprises a horizontal section 310 and a bent section 312, and the bent section 312 is tangent to the horizontal section 310 and arranged at an angle. When the first pulley 11 moves along the horizontal section 310, the drawer 10 is pulled out. When the first pulley 11 moves along the bent section 312, the drawer 10 rotates downward. The storage rack 1 has the above-mentioned curved slide rail 31, so that the drawer 10 can rotate downward by a certain angle after being pulled to an extreme position, so that users not tall enough can conveniently access food.

Further referring to FIG. 3, the curved slide rail 31 is disposed near a top of the drawer 10, the sliding assembly further comprises a second slide rail 33 disposed away from the top of the drawer 10 and a second pulley 13 moving along the second slide rail 33, the second slide rail 33 extends from a start point to an end point in a horizontal direction, and the bent section 312 is configured as a circular arc with the end point of the second slide rail 33 as a center of a circle and with a vertical distance from the horizontal section 310 to the second slide rail 33 as a radius. The provision of the second slide rail 33 makes the connection of the drawer 10 and the storage rack body 20 firmer and avoids the damage of a single slide rail as bearing a larger weight; meanwhile, the second slide rail 33 and the curved slide rail 31 are disposed at the top and bottom of the side wall of the drawer 10, respectively so that the user can save labor upon turning the drawer 10 with the end point of the second slide rail 33 as a pivot.

Further referring to FIG. 2 and FIG. 3, the second slide rail 33 and the horizontal section 310 of the curved slide rail 31 are parallel and equal in length. In other words, when the user pulls the drawer 10, the first pulley 11 moves relative to the curved slide rail 31 in the horizontal direction, and at the same time, the second pulley 13 moves relative to the second slide rail 33 in the horizontal direction until the second pulley 13 reaches the end point position of the second slide rail 33. When the second pulley 13 moves to the end point position of the second slide rail 33, the second pulley 13 is limited. At this time, the user rotates the drawer 10 downward, and the first pulley 11 continues to move along the bent section 312, so that the drawer 10 rotates downward by an angle of a central angle corresponding to the circular arc-shaped bent section 312.

The sliding assembly comprises a support plate 30 connected to the storage rack body 20, the curved slide rail 31 is provided on one of the drawer 10 and the support plate 30, and the first pulley 11 is disposed on the other of the drawer 10 and the support plate 30. The curved slide rail 31 is provided on the support plate 30, and the first pulley 11 is connected to the top of the side wall of the drawer 10 by screws. In addition, the second slide rail 33 is also disposed on the support plate 30. Correspondingly, the second pulley 13 is connected to the bottom of the side wall of the drawer 10 by screws. Certainly, the relative movement of the pulley and the slide rail may also be achieved by reversing the positions of the first pulley 11 and the curved slide rail 31, and by reversing the positions of the second pulley 13 and the second slide rail 33 simultaneously or non-simultaneously.

The sliding assembly further comprises a sub-sliding mechanism, and the support plate 30 is slidably connected to the storage rack body 20 through the sub-sliding mechanism to increase a distance that the drawer 10 may be drawn out. Furthermore, the sub-sliding mechanism comprises a third pulley 35 provided on one of the support plate 30 and the storage rack body 20, and a third slide rail 25 disposed on the other of the support plate 30 and the storage rack body 20, and the third pulley 35 is received in the third slide rail 25 and movable along the third slide rail 25. The sub-sliding mechanism enables relative movement between the support plate 30 and the storage rack body 20, thereby increasing the distance that the drawer 10 may be pulled out relative to the storage rack body 20.

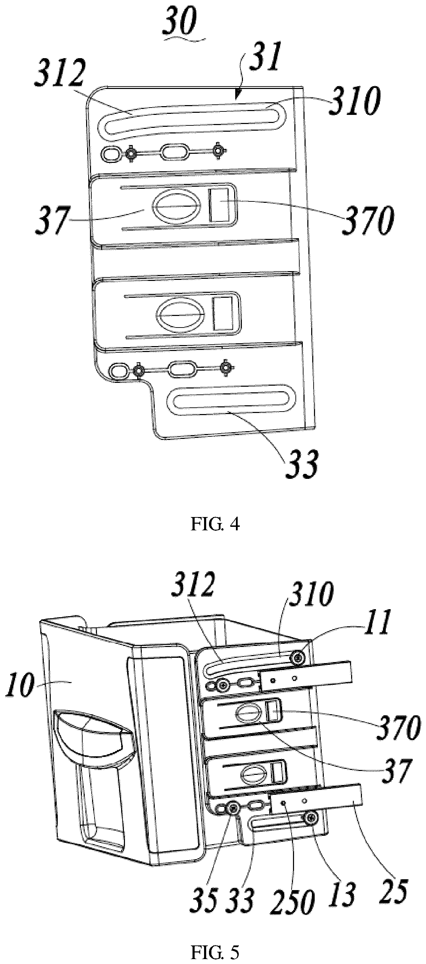

As shown in FIG. 4, the third pulley 35 is connected to the support plate 30, the third slide rail 25 is provided with a mounting hole 250, and a fastener passes through the mounting hole 250 to fix the third slide rail 25 on the storage rack body 20. The sub-sliding mechanism of the present embodiment comprises two pairs of third pulleys 35 and third slide rails 25. Certainly, in other embodiments, only one pair of such sub-sliding mechanisms may be provided.

As shown in FIG. 4, the sub-sliding mechanism further comprises a limiting member 37, the limiting member 37 is provided on the support plate 30, the storage rack body 20 is provided with a stop surface cooperating with the limiting member 37, and the limiting member 37 cooperates with the stop surface to limit further displacement of the support plate 30 relative to the storage rack body 20, to prevent the support plate 30 from being totally pulled out and further preventing the drawer 10 from falling off.

With reference to FIG. 3 and FIG. 4, the embodiments provides two limiting members 37 which are elastic pieces extending in a horizontal direction, an extending direction of the elastic pieces is opposite to a direction in which the support plate 30 is drawn out relative to the storage rack body 20, a free end of the elastic piece is provided with an inverted snap 370, the inverted snap 370 has a limiting surface perpendicular to the horizontal direction, and, the limiting surface abuts against the stop surface when the support plate 30 moves to a limiting position relative to the storage rack body 20. Such an arrangement enables the limiting member 37 to allow a proper amount of elastic deformation when the support plate 30 enters the storage rack body 20 inward, thereby preventing inner wall of the storage rack body 20 from being scratched and damaged by the inverted snap 370. Furthermore, the inner wall of the storage rack body 20 is provided with a stop groove 27 provided along the moving direction of the limiting member 37, the stop groove 27 receives the inverted snap 370 and allows the inverted snap 370 to move therein, and the stop surface is formed as an end face of the stop groove 27.

As shown in FIG. 5, when the user needs to pull out the drawer 10, the support plate 30 first moves relative to the storage rack body 20, i.e., the support plate 30 drives the third pulley 35 to slide relative to the third slide rail 25 until the limiting surface of the limiting member 37 abuts against the stop surface of the storage rack body 20, and the support plate 30 is limited. The drawer 10 is further pulled, the drawer 10 starts to move relative to the support plate 30, the first pulley 11 moves from a start point to an end point along the horizontal section 310 of the curved slide rail 31, and the second pulley 13 moves from the start point to the end point of the second slide rail 33.

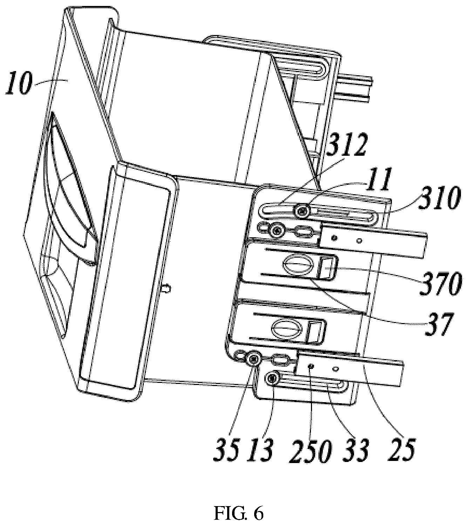

As shown in FIG. 6, the first pulley 11 moves to the end point of the horizontal section 310 and the second pulley 13 moves to the end point of the second slide rail 33, whereupon the second pulley 13 is limited. If the drawer 10 is further pulled, the first pulley 11 enters the bent section 312 and slides along the bent section 312 until it reaches the end point of the bent section 312 (as shown in FIG. 2). At this time, the drawer 10 rotates downward by a certain angle, thereby improving the convenience for the user in picking and placing articles.

In summary, the storage rack 1 provided in the present invention avoids the problem of air leakage due to the assembling gap because the temperature and humidity of the storage rack 1 is adapted to be controlled independently due to the excellent sealing performance formed between the drawer 10 and the storage rack body 20; in addition, the curved slide rail 31 having the bent section 312 is provided between the drawer 10 and the storage rack body 20, so that the drawer 10 can rotate down relative to the storage rack body 20, thereby reducing the height of the drawer 10 and meeting the need of users not tall enough to access articles. In the above embodiment, the storage rack 1 is provided on the door of the refrigerator. Certainly, in a variant embodiment, the storage rack 1 may also be provided in the cabinet of the refrigerator.

## Claims

1. A refrigerator door, comprising a rotatable storage rack (1), the rotatable storage rack (1) comprising a drawer (10), a storage rack body (20) for slidingly receiving the drawer (10), and a sliding assembly disposed between the drawer (10) and the storage rack body (20); wherein the sliding assembly comprises a curved slide rail (31) and a first pulley (11) moving along the curved slide rail (31), the curved slide rail (31) comprises a horizontal section (310) and a bent section (312), and the bent section (312) is tangent to the horizontal section (310) and arranged at an angle; when the first pulley (11) moves along the horizontal section (310), the drawer (10) is pulled out; when the first pulley (11) moves along the bent section (312), the drawer (10) rotates downward; **characterized in that** the curved slide rail (312) is disposed near a top of the drawer (10), the sliding assembly further comprises a second slide rail (33) disposed away from the top of the drawer (10) and a second pulley (13) moving along the second slide rail (33), the second slide rail (33) extends from a start point to an end point in a horizontal direction, and the bent section (312) is configured as a circular arc with the end point of the second slide rail (33) as a center of a circle and with a vertical distance from the horizontal section (310) to the second slide rail (33) as a radius.

2. The refrigerator door according to claim 1, wherein comprising a latch structure comprising a male portion and a female portion, the male portion is provided on one of the drawer (10) and the storage rack body (20), the female portion is disposed on the other of the drawer (10) and the storage rack body (20), and the male portion and the female portion cooperate with each other unlockably.

3. The refrigerator door according to claim 1, wherein the sliding assembly comprises a support plate (30) connected to the storage rack body (20), the curved slide rail (31) is provided on one of the drawer (10) and the support plate (30), and the first pulley (11) is disposed on the other of the drawer (10) and the support plate (30).

4. The refrigerator door according to claim 3, wherein the sliding assembly further comprises a sub-sliding mechanism, and the support plate (30) is slidably connected to the storage rack body (20) through the sub-sliding mechanism to increase a distance that the drawer (10) may be drawn out.

5. The refrigerator door according to claim 4, wherein the sub-sliding mechanism comprises a third pulley (35) provided on one of the support plate (30) and the storage rack body (20), and a third slide rail (25) disposed on the other of the support plate (30) and the storage rack body (20), and the third pulley (35) is received in the third slide rail (25) and movable along the third slide rail (25).

6. The refrigerator door according to claim 4, wherein the sub-sliding mechanism further comprises a limiting member (37), the limiting member (37) is provided on the support plate (30), the storage rack body (20) is provided with a stop surface cooperating with the limiting member (37), and the limiting member (37) cooperates with the stop surface to limit further displacement of the support plate (30) relative to the storage rack body (20).

7. The refrigerator door according to claim 6, wherein the limiting member (37) is an elastic piece extending in a horizontal direction, the horizontal direction is opposite to a direction in which the support plate (30) is drawn out relative to the storage rack body (20), a free end of the elastic piece is provided with an inverted snap (370), the inverted snap (370) has a limiting surface perpendicular to the horizontal direction, and the limiting surface abuts against the stop surface when the support plate (30) moves to a limiting position relative to the storage rack body (20).

8. A refrigerator **characterized in that** it comprises a refrigerator door according to claim 1.

## Patentansprüche

1. Kühlschranktür, umfassend ein drehbares Speichergestell (1), das drehbare Speichergestell (1) umfassend ein Schubfach (10), einen Speichergestellkörper (20) zum gleitenden Aufnehmen des Schubfachs (10) und eine zwischen dem Schubfach (10) und dem Speichergestellkörper (20) angeordnete Gleitanordnung; wobei die Gleitanordnung eine gebogene Gleitschiene (31) und eine erste Riemenscheibe (11) umfasst, die sich entlang der gebogenen Gleitschiene (31) bewegt, wobei die gebogene Gleitschiene (31) einen horizontalen Abschnitt (310) und einen gebogenen Abschnitt (312) umfasst und der gebogene Abschnitt (312) den horizontalen Abschnitt (310) tangiert und in einem Winkel angeordnet ist; wenn sich die erste Riemenscheibe (11) entlang des horizontalen Abschnitts (310) bewegt, wird das Schubfach (10) herausgezogen; wenn sich die erste Riemenscheibe (11) entlang des gebogenen Abschnitts (312) bewegt, dreht das Schubfach (10) nach unten; **dadurch gekennzeichnet, dass** die gebogene Gleitschiene (312) in der Nähe einer Oberseite des Schubfachs (10) angeordnet ist, wobei die Gleitanordnung ferner eine zweite Gleitschiene (33), die von der Oberseite des Schubfachs (10) entfernt angeordnet ist, und eine zweite Riemenscheibe (13) umfasst, die sich entlang der zweiten Gleitschiene (33) bewegt, die zweite Gleitschiene (33) sich von einem Startpunkt zu einem Endpunkt in einer horizontalen Richtung erstreckt, und der gebogene Abschnitt (312) als ein Kreisbogen mit dem Endpunkt der zweiten Gleitschiene (33) als Mitte eines Kreises und mit einem vertikalen Abstand von dem horizontalen Abschnitt (310) zu der zweiten Gleitschiene (33) als Radius konfiguriert ist.

2. Kühlschranktür nach Anspruch 1, wobei umfassend eine Verriegelungsstruktur, umfassend einen Steckabschnitt und einen Buchsenabschnitt, wobei der Steckabschnitt an einem von dem Schubfach (10) und dem Speichergestellkörper (20) bereitgestellt ist, wobei der Buchsenabschnitt an dem anderen von dem Schubfach (10) und dem Speichergestellkörper (20), angeordnet ist, und wobei der Steckabschnitt und der Buchsenabschnitt entriegelbar miteinander zusammenwirken.

3. Kühlschranktür nach Anspruch 1, wobei die Gleitanordnung eine mit dem Speichergestellkörper (20) verbundene Trägerplatte (30) umfasst, die gebogene Gleitschiene (31) an einem von dem Schubfach (10) und der Trägerplatte (30) bereitgestellt ist und die erste Riemenscheibe (11) an dem anderen von dem Schubfach (10) und der Trägerplatte (30) angeordnet ist.

4. Kühlschranktür nach Anspruch 3, wobei die Gleitanordnung ferner einen Gleitteilmechanismus umfasst und die Trägerplatte (30) durch den Gleitteilmechanismus gleitend mit dem Speichergestellkörper (20) verbunden ist, um einen Abstand zu vergrößern, über den das Schubfach (10) herausgezogen werden kann.

5. Kühlschranktür nach Anspruch 4, wobei der Gleitteilmechanismus eine dritte Rolle (35), die entweder an der Trägerplatte (30) oder dem Speichergestellkörper (20) bereitgestellt ist, und eine dritte Gleitschiene (25) umfasst, die an dem anderen von der Trägerplatte (30) und dem Speichergestellkörper (20) angeordnet ist, und die dritte Riemenscheibe (35) in der dritten Gleitschiene (25) aufgenommen und entlang der dritten Gleitschiene (25) beweglich ist.

6. Kühlschranktür nach Anspruch 4, wobei der Gleitteilmechanismus ferner ein Begrenzungselement (37) umfasst, das Begrenzungselement (37) an der Trägerplatte (30) bereitgestellt ist, der Speichergestellkörper (20) mit einer Anschlagfläche versehen ist, die mit dem Begrenzungselement (37) zusammenwirkt, und das Begrenzungselement (37) mit der Anschlagfläche zusammenwirkt, um ein weiteres Verschieben der Trägerplatte (30) in Bezug auf den Speichergestellkörper (20) zu begrenzen.

7. Kühlschranktür nach Anspruch 6, wobei das Begrenzungselement (37) ein elastisches Stück ist, das sich in einer horizontalen Richtung erstreckt, wobei die horizontale Richtung entgegengesetzt zu einer Richtung ist, in der die Trägerplatte (30) in Bezug auf den Speichergestellkörper (20) herausgezogen wird, wobei ein freies Ende des elastischen Stücks mit einem umgekehrten Schnapper (370) versehen ist, wobei der umgekehrte Schnapper (370) eine Begrenzungsfläche senkrecht zu der horizontalen Richtung aufweist, und wobei die Begrenzungsfläche an der Anschlagfläche anliegt, wenn sich die Trägerplatte (30) in eine Begrenzungsposition in Bezug auf den Speichergestellkörper (20) bewegt.

8. Kühlschrank, **dadurch gekennzeichnet, dass** er eine Kühlschranktür nach Anspruch 1 umfasst.

## Revendications

1. Porte de réfrigérateur, comprenant un porte-bouteille rotatif (1), le porte-bouteille rotatif (1) comprenant un tiroir (10), un corps principal de porte-bouteille rotatif (20) pour recevoir de façon coulissante le tiroir (10), et un ensemble coulissant disposé entre le tiroir (10) et le corps principal de porte-bouteille (20), dans laquelle l'ensemble coulissant comprend un rail coulissant incurvé (31) et une première poulie (11) se déplaçant le long du rail coulissant incurvé (31) ; le rail coulissant incurvé (31) comprend une section horizontale (310) et une section courbée (312), et la section courbée (312) est tangente à la section horizontale (310) et inclinée d'un certain angle ; lorsque la première poulie (11) se déplace le long de la section horizontale (310), le tiroir (10) est tiré vers l'extérieur ; lorsque la première poulie (11) se déplace le long de la section courbée (312), le tiroir (10) tourne vers le bas ; **caractérisée en ce que** le rail coulissant incurvé (312) est disposé près d'un sommet du tiroir (10), l'ensemble coulissant comprend en outre un deuxième rail coulissant (33) disposée à l'écart du sommet du tiroir (10) et une deuxième poulie (13) se déplaçant le long du deuxième rail coulissant (33), le deuxième rail coulissant (33) s'étend d'un point de départ à un point d'arrivée dans une direction horizontale, et la section courbée (312) est configurée comme un arc de cercle avec le point d'arrivée du deuxième rail coulissant (33) comme centre d'un cercle et avec une distance verticale de la section horizontale (310) au deuxième rail coulissant (33) comme rayon.

2. Porte de réfrigérateur selon la revendication 1, comprenant une structure de verrouillage composée d'une partie mâle et d'une partie femelle, la partie mâle est disposée sur l'un du tiroir (10) et du corps principal de porte-bouteille (20), la partie femelle est disposée sur l'autre du tiroir (10) et du corps principal de porte-bouteille (20), et la partie mâle et la partie femelle coopèrent l'une avec l'autre de manière déverrouillable.

3. Porte de réfrigérateur selon la revendication 1, dans laquelle l'ensemble coulissant comprend une plaque de support (30) reliée au corps principal de porte-bouteille (20), le rail coulissant incurvé (31) est prévu sur l'un du tiroir (10) et de la plaque de support (30) et la première poulie (11) est disposée sur l'autre du tiroir (10) et de la plaque de support (30).

4. Porte de réfrigérateur selon la revendication 3, dans laquelle l'ensemble coulissant comprend en outre un mécanisme coulissant secondaire, et la plaque de support (30) est reliée de manière coulissante au corps principal de porte-bouteille (20) par l'intermédiaire du mécanisme coulissant secondaire afin d'augmenter la distance sur laquelle le tiroir (10) peut être tiré vers l'extérieur.

5. Porte de réfrigérateur selon la revendication 4, dans laquelle le mécanisme coulissant secondaire comprend une troisième poulie (35) prévue sur l'un de la plaque de support (30) et du corps principal de porte-bouteille (20), et un troisième rail coulissant (25) disposé sur l'autre de la plaque de support (30) et du corps principal de porte-bouteille (20), et la troisième poulie (35) est reçue dans le troisième rail coulissant (25) et se déplace le long du troisième rail coulissant (25).

6. Porte de réfrigérateur selon la revendication 4, dans laquelle le mécanisme coulissant secondaire comprend en outre un élément de limitation (37), l'élément de limitation (37) est prévu sur la plaque de support (30), le corps principal de porte-bouteille (20) est prévu avec une surface de butée coopérant avec l'élément de limitation (37), et l'élément de limitation (37) coopère avec la surface de butée pour limiter un déplacement supplémentaire de la plaque de support (30) par rapport au corps principal de porte-bouteille (20).

7. Porte de réfrigérateur selon la revendication 6, dans laquelle l'élément de limitation (37) est une pièce élastique s'étendant dans une direction horizontale, la direction horizontale est opposée à une direction dans laquelle la plaque de support (30) est tirée vers l'extérieur par rapport au corps principal de porte-bouteille (20), une extrémité libre de la pièce élastique est pourvue d'un encliquetage inversé (370), l'encliquetage inversé (370) a une surface de limitation perpendiculaire à la direction horizontale, et la surface de limitation est en butée contre la surface de butée lorsque la plaque de support (30) se déplace dans une position de limitation par rapport au corps principal de porte-bouteille (20).

8. Réfrigérateur **caractérisé en ce qu'**il comprend une porte de réfrigérateur selon la revendication 1.
